# FASCICULE DE BREVET EUROPEEN

(11) **EP 1 506 354 B1**
(45) Date de publication et mention de la délivrance du brevet: **03.09.2008**
(21) Numéro de dépôt: 03755181.9
(22) Date de dépôt: 22.05.2003
(51) Int. Cl.: F16F 7/12, B64D 27/00

(54) **BIELLETTE FUSIBLE AVEC AMORTISSEUR ET BUTEE ANTIRETOUR**
SCHMELZBARE SCHWINGE MIT DÄMPFER UND RÜCKLAUFSPERRE
FUSIBLE LINK COMPRISING DAMPER AND BACKSTOP

(30) Priorité: 23.05.2002 FR 0206257
(43) Date de publication de la demande: 16.02.2005
(73) Titulaire: SNECMA, 75015 Paris (FR)
(72) Inventeur: DUSSERRE-TELMON, Guy, F-77115 Sivry-Courtry (FR); ETOILE, Gérard, F-77140 Nemours (FR)
(74) Mandataire: Barbin le Bourhis, Joël
(86) Numéro de dépôt international: PCT/FR2003/001546
(87) Numéro de publication internationale: WO 2003/100288

(56) Documents cités:
- FR-A- 2 360 819
- FR-A- 2 795 793
- GB-A- 2 236 573
- US-A- 3 819 218
- US-A- 4 341 291

## Description

L'invention se rapporte aux biellettes servant à relier deux éléments de structure.

Elle concerne plus précisément une biellette comportant une tige ayant à chaque extrémité un organes de liaison et ayant un axe géométrique X passant par les deux organes de liaison.

Il est connu, notamment en aéronautique, de lier entre eux deux éléments de structure par des biellettes. Ces biellettes doivent être à la fois légères et très résistantes aussi bien en traction qu'en compression.

En cas de choc dans un élément de structure, la biellette est soumise à un pic de contrainte. Pour éviter la destruction des éléments de structure, difficiles à réparer, il est préférable, au-delà d'un seuil déterminé de contrainte, que ce soit la biellette qui absorbe le choc soit par déformation plastique, soit tout simplement par rupture. Mais en cas de rupture, les deux éléments séparés de la biellette deviennent incontrôlables et peuvent causer des dommages aux pièces environnantes et, de plus, la biellette n'assure plus son rôle.

FR 2 795 793 décrit une biellette fusible à absorption d'énergie qui comporte deux éléments coaxiaux à savoir un cylindre équipé à l'une de ses extrémités d'un organe de liaison, et une tige reliée au deuxième organe de liaison qui comporte une collerette logeant dans une cavité cylindrique du cylindre, deux manchons fusibles entourant la tige étant disposés de part et d'autre de la collerette, en appui contre un fond du cylindre et une face de la collerette. Cette biellette comporte ainsi un organe fusible dans le sens de la traction et dans le sens de la compression. Pour ajuster la résistance de chaque organe fusible, formé par un manchon, ce dernier comporte une pluralité de lumières allongées et parallèles à l'axe géométrique de la biellette. Pour assurer le parallélisme des deux éléments après le flambage d'un manchon, le cylindre comporte du côté de son organe de liaison une portée cylindrique dans laquelle l'extrémité libre de la tige peut coulisser. Le cylindre comporte donc une portion massive qui augmente la masse de la biellette. En outre, les organes fusibles sont volumineux et nécessitent un gros travail d'usinage pour réaliser les lumières.

Par ailleurs, US 4,066,149 décrit une biellette contenant une tige présentant une section rétrécie installée dans un agencement de tube téléscopique. En cas de rupture, le choc est amorti par des enroulements hélicoïdaux. De plus GB-A-793541 décrit un système d'amortissement comportant une partie filetée déformable.

Le but de Invention est de proposer une biellette de type traditionnel qui puisse se rompre lorsque la force de traction, suite à un choc, est supérieure à une valeur prédéterminée, sans créer de dommages aux pièces environnantes et qui assure son rôle de liaison après rupture, sans augmentation de masse excessive, tout en évitant le retour arrière.

L'invention concerne donc une biellette comportant une tige ayant à chaque extrémité un organe de liaison et ayant un axe géométrique passant par les deux organes de liaison, dans laquelle ladite tige comporte une zone fusible sous forme d'une section rétrécie entre une première portion de tige reliée à un premier organe de liaison et une deuxième portion de tige reliée au deuxième organe de liaison, ladite zone fusible étant destinée à rompre lorsque la force de traction supportée par ladite biellette est supérieure à une valeur prédéterminée, et dans laquelle des moyens pour rendre indissociables les deux portions de tige en cas de rupture de la zone fusible comportent un corps de cylindre coaxial à l'axe X et solidaire par l'une de ses extrémités de la première portion de tige, ledit corps de cylindre présentant à l'autre extrémité un fond dans lequel est ménagé un orifice à travers lequel la deuxième portion de tige est susceptible de coulisser, ledit corps de cylindre définissant une cavité cylindrique dans laquelle loge la zone fusible ainsi qu'une collerette (11) formée autour de la deuxième portion de tige et susceptible de coulisser dans ladite cavité, caractérisée en ce qu'elle comporte en outre une pluralité de dents formées sur la paroi interne du corps de cylindre dans la chambre annulaire délimitée par la collerette et le fond du corps de cylindre, lesdites dents étant susceptibles d'être cassées par la collerette suite à la rupture de la zone fusible, pour amortir le choc en cas de rupture de la zone fusible, en ce qu'elle comporte en outre des moyens pour empêcher le retour arrière de la deuxième portion de tige après la rupture de la zone fusible et en ce que les moyens d'anti-retour de la deuxième portion de tige comportent au moins une première dent formée sur la paroi interne du corps de cylindre en regard d'une rainure hélicoïdale ménagée à la périphérie de la collerette, la coopération de ladite première dent avec ladite rainure immédiatement après la rupture de la zone fusible, entraînant une torsion d'au moins l'une des portions de tige, et ladite première dent formant une butée anti-retour après son franchissement par la collerette par suite de la rotation inverse de ladite portion de tige par effet élastique.

D'autres avantages et caractéristique de l'invention ressortiront à la lecture de la description suivante faite à titre d'exemple et en référence aux dessins annexés dans lesquels :
- la figure 1 est une coupe longitudinale d'une biellette selon l'invention ;
- la figure 2 est une coupe longitudinale de la biellette de la figure 1 après rupture de la zone fusible ;
- la figure 3 est une coupe transversale du corps de cylindre selon la ligne III-III de la figure 1 ;
- la figure 4 montre en développé la disposition des dents sur la surface interne du cylindre, et la périphérie de la collerette avant la rupture de la zone fusible dans une biellette comportant des moyens d'anti-retour, et
- la figure 5, semblable à la figure 4 montre la position de la collerette après la rupture de la zone fusible.

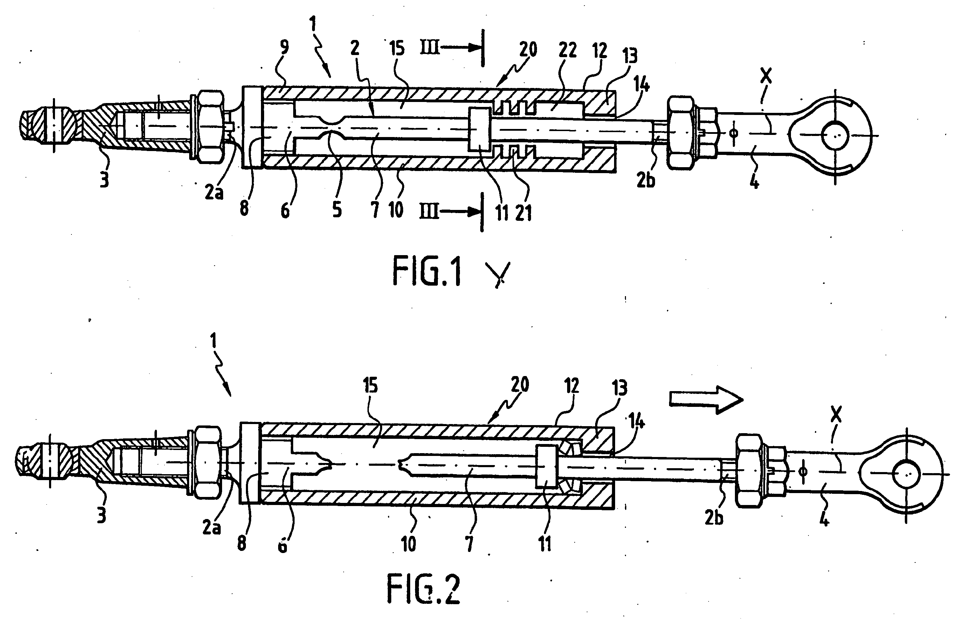

Les figures 1 et 2 montrent une biellette 1 qui comporte une tige 2 d'axe X équipée à chacune de ses extrémités 2a et 2b d'un organe de liaison, référencé 3 à l'extrémité 2a, et référencé 4 à l'extrémité 2b.

Les organes de liaison 2a et 2b sont du type à rotule dont l'axe est perpendiculaire à l'axe X.

La tige 2 comporte une section rétrécie formant une zone fusible 5 entre une première portion de tige 6 située du côté du premier organe de liaison 3 et une deuxième portion de tige 7 située du côté du deuxième organe de liaison 4. Cette zone fusible 5 est destinée à rompre lorsque la force de traction supportée par la biellette 1 est supérieure à une valeur prédéterminée, par suite par exemple d'un choc sur l'un des éléments de structure reliés par la biellette 1.

La première portion de tige 6 est nettement plus courte que la deuxième portion de tige 7, et elle comporte près de son extrémité 2a, un renflement annulaire 8 fileté à sa périphérie destiné à recevoir l'extrémité 9 d'un cylindre 10, d'axe X.

La deuxième portion de tige 7 présente dans sa zone médiane une collerette 11 d'axe X qui a un diamètre légèrement inférieur à celui du renflement annulaire 8.

Le cylindre 10 entoure la tige 2 sur pratiquement toute sa longueur. Il comporte à son extrémité 9 un filetage intérieur coopérant avec le filetage externe du renflement annulaire 8. Son diamètre interne est supérieur à celui de la tige 2 et légèrement supérieur à celui de la collerette 11. Il comporte à son autre extrémité 12 un fond 13 qui présente un orifice 14 d'axe X traversé par la deuxième portion de tige 7. Le fond 13 est suffisamment rigide pour supporter un choc lors de la rupture de la zone fusible 5 et l'orifice 14 est susceptible de jouer le rôle d'une portée cylindrique pour la deuxième portion de tige 7.

La cylindre 10 délimite une cavité Interne 15 dans laquelle loge la zone fusible 5 et la collerette 11. La zone fusible 5 est située près de l'extrémité 9 du cylindre 10 et la collerette 11 est positionnée sensiblement à mi-distance entre la zone fusible 5 et le fond 13 du cylindre 9.

En cas de rupture de la zone fusible 5, la paroi interne du cylindre 10 constitue une portée cylindrique pour la collerette 11.

Ainsi donc, la structure de biellette décrite ci-dessus permet de maîtriser l'endroit exact de la rupture de la tige 2, dans le cas où la biellette 1 est soumise à une force de traction supérieure à une force prédéterminée par la section rétrécie de la zone fusible 5. En cas de rupture de la zone fusible 5, les deux portions de tige 6 et 7 sont rendue indissociables grâce à la présence du cylindre 10 solidaire par son extrémité 9 de la première portion de tige 7, et à la présence de la collerette 11 emprisonnée dans la cavité interne 15 du cylindre 10. L'amplitude de l'entraxe des deux portions de tige 6 et 7 séparées est également limitée du fait que la collerette 11 coulisse dans le cylindre 10 à la manière d'un piston.

Très avantageusement, la biellette 1 décrite ci-dessus comporte en outre des moyens mécaniques 20 pour amortir le choc à la suite de la rupture de la zone fusible 5.

Ces moyens mécaniques 20 sont par exemple réalisés sous la forme de picots ou de dents 21 prévus sur la paroi Interne du cylindre 10 dans la chambre 22 délimitée par la collerette 11 et le fond 13 du cylindre 10.

Ces dents 21 sont de préférence réparties sur une ou plusieurs spirales dans la chambre 22 du côté de la collerette 11. Ces dents 21 ont une longueur telle qu'elles peuvent être cisaillées par la collerette 11 lors du déplacement de cette dernière suite à la rupture de la zone fusible 5.

En cas de rupture de la zone fusible 5, les dents 21 seront brisées en cascade, c'est-à-dire que les dents les plus proches de la collerette 11, dans la situation normale de la biellette 1, seront cassées les premières. Cette disposition permet d'absorber progressivement au moins une partie de l'énergie libérée par la rupture de la zone fusible 5.

Les dents cassées 21 restent emprisonnées dans la chambre 22, et si l'énergie libérée par la rupture de la zone fusible 5 est suffisante pour casser toutes les dents 21, la collerette 11 viendra comprimer les dents cassées 21 contre le fond 13 du cylindre 10 jusqu'à l'absorption de l'énergie restante. Par la suite, la collerette 11 sera libre de se déplacer dans le cylindre 10 en fonction de la direction de la force s'exerçant sur les organes de liaison 3 et 4.

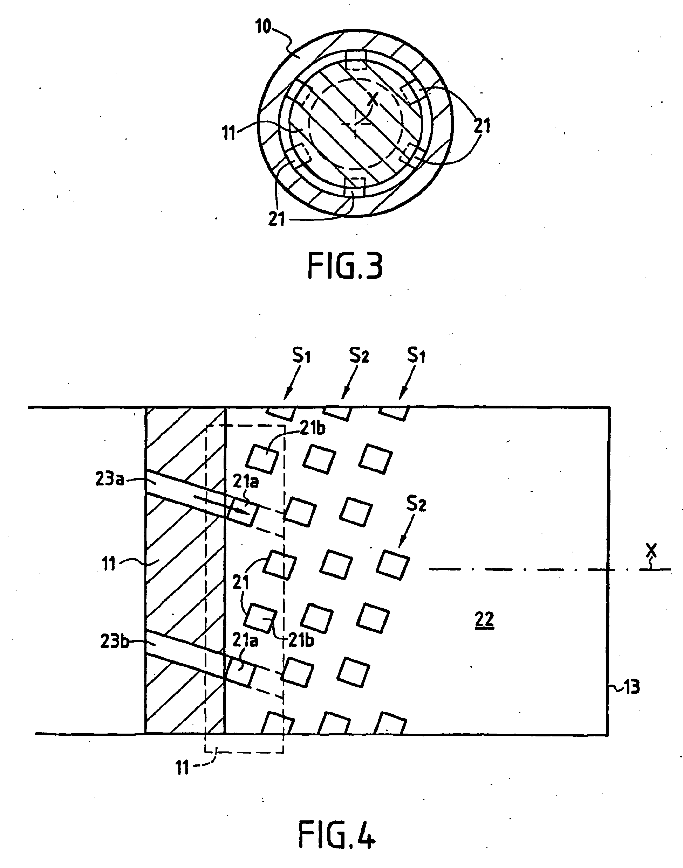

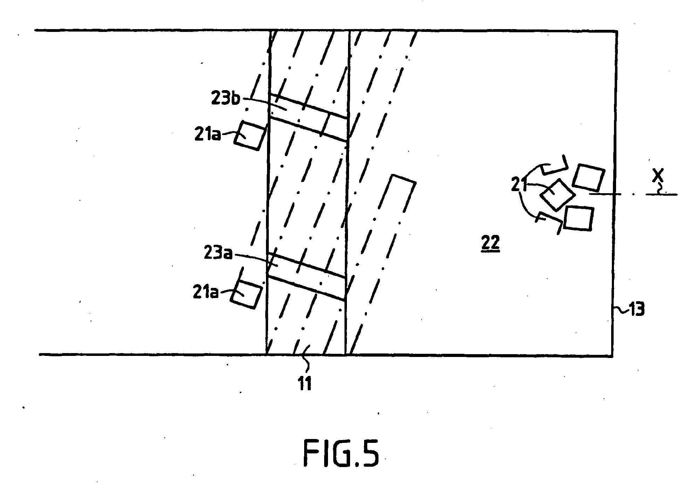

Les figures 4 et 5 montrent un développé de la paroi interne du cylindre 10, qui comporte deux spirales S1, S2 de dents 21 diamétralement opposées, chaque spirale S1, S2 comportant par exemple une spire et demie, et les deux spirales S1 et S2 étant diamétralement opposées.

Lors de la rupture de la zone fusible 5, la collerette 11 qui, initialement avant la rupture, était au voisinage des premières dents 21a des deux spirales S1 et S2, va casser ces dents 21a, puis les deuxièmes dents 21b de chaque spirale, et ainsi de suite.

Sur les figures 4 et 5, on voit que la périphérie de la collerette 11 comporte, selon une variation de réalisation de l'invention, deux rainures hélicoïdales référencées 23a et 23b, diamétralement opposées qui débouchent dans la chambre 22 en regard des deux premières dents 21a et 21b des deux spirales S1 et S2.

Lors de la rupture de la zone fusible 5, la collerette 11 va se déplacer vers la droite sur la figure 4, et les premières dents 21a, dites dents guideuses, des deux spirales S1 et S2, vont s'engager dans les rainures hélicoïdales 23a et 23b, sans casser. La collerette 11, au début de son mouvement de translation, va subir un couple de torsion qui va absorber une partie de l'énergie.

Lors de ce mouvement de torsion, les deuxièmes dents 21b, puis les troisièmes dents et éventuellement les suivantes vont être frappées par les secteurs périphériques de la collerette 11 situées entre les rainures hélicoïdales 23a et 23b et vont se briser, en absorbant une partie de l'énergie.

Lorsque la collerette 11 aura franchi une distance suffisante pour se désengager des dents guideuses 21a et 21b, elle va, par effet ressort, reprendre sa position angulaire initiale dans le cylindre 10, puis elle va poursuivre sa course vers le fond 13 de la manière décrite ci-dessus, en subissant un mouvement de torsion par des deuxièmes dents guideuses et en cassant toute les dents rencontrées.

Avec ce mode de réalisation particulier, la collerette 11 sera ensuite libre de se déplacer dans le cylindre 10 en fonction de la direction de la force s'exerçant sur les organes de liaison 3 et 4, mais le chemin de retour parcouru par la collerette 11 sera limité par des dents suiveuses 21a et 21b qui, comme on le voit maintenant sur la figure 5, servent de butée à la collerette 11 dans le sens de la compression, ces dents guideuses 21a et 21b n'étant plus en regard des rainures hélicoïdales 23a et 23b.

## Revendications

1. Biellette comportant une tige (2) ayant à chaque extrémité un organe de liaison (3, 4) et ayant un axe géométrique passant par les deux organes de liaison (3, 4), dans laquelle ladite tige (2) comporte une zone fusible (5) sous forme d'une section rétrécie entre une première portion de tige (6) reliée à un premier organe de liaison (3) et une deuxième portion de tige (7) reliée au deuxième organe de liaison (4), ladite zone fusible (5) étant destinée à rompre lorsque la force de traction supportée par ladite biellette est supérieure à une valeur prédéterminée, et dans laquelle des moyens (10, 11, 14) pour rendre indissociables les deux portions de tige (6, 7) en cas de rupture de la zone fusible (5) comportent un corps de cylindre (10) coaxial à l'axe X et solidaire par l'une de ses extrémités (9) de la première portion de tige (6), ledit corps de cylindre (10) présentant à l'autre extrémité un fond (13) dans lequel est ménagé un orifice (14) à travers lequel la deuxième portion de tige (7) est susceptible de coulisser, ledit corps de cylindre (10) définissant une cavité cylindrique (15) dans laquelle loge la zone fusible (5) ainsi qu'une collerette (11) formée autour de la deuxième portion de tige (7) et susceptible de coulisser dans ladite cavité (15), **caractérisée en ce qu'**elle comporte en outre une pluralité de dents (21) formées sur la paroi interne du corps de cylindre (10) dans la chambre annulaire (22) délimitée par la collerette (11) et le fond (13) du corps de cylindre (10), lesdites dents (21) étant susceptibles d'être cassées par la collerette (11) suite à la rupture de la zone fusible (5), pour amortir le choc en cas de rupture de la zone fusible, **en ce qu'**elle comporte en outre des moyens pour empêcher le retour arrière de la deuxième portion de tige (7) après la rupture de la zone fusible (5) et **en ce que** les moyens d'anti-retour de la deuxième portion de tige (7) comportent au moins une première dent (21a) formée sur la paroi interne du corps de cylindre (10) en regard d'une rainure hélicoïdale (23a, 23b) ménagée à la périphérie de la collerette (11), la coopération de ladite première dent (21a) avec ladite rainure (23a, 23b) immédiatement après la rupture de la zone fusible (5) entraînant une torsion d'au moins l'une des portions de tige (7), et ladite première dent (21a) formant une butée anti-retour après son franchissement par la collerette (11) par suite de la rotation inverse de ladite portion de tige (7) par effet élastique.

2. Biellette selon la revendication 1, **caractérisée par le fait que** les dents (21) sont réparties sur au moins une spirale (S1, S2).

## Claims

1. A link comprising a rod (2) having a connection member (3, 4) at each end with an axis X going through both connection members (3, 4), in which the rod (2) includes a fusible zone (5) in the form of a narrow section lying between a first rod portion (6) connected to a first connection member (3) and a second rod portion (7) connected to the second connection member (4), said fusible zone (5) being intended to break when the tensile force to which said link is subjected is greater than a predetermined value, and further includes means (10, 11, 14) for making the two rod portions (6, 7) inseparable in the event of the fusible zone (5) breaking and comprises a cylinder body (10) coaxial about the axis X and secured at one end (9) to the first rod portion (6), said cylinder body (10) presenting at its other end an end wall (13) in which an orifice (14) has been made through which the second rod portion (7) is capable of sliding, said cylinder body (10) defining a cylindrical cavity (15) in which the fusible zone (5) is housed, together with a collar (11) formed around the second rod portion (7) which is capable of sliding into said cavity (15), **characterized by** the fact that it also comprises a plurality of teeth (21) formed on the inside wall of the cylinder body (10) in the annular chamber (22) defined by the collar (11) and by the end wall (13) of the cylinder body (10), said teeth (21) being capable of being broken by the collar (11) following the breaking of the fusible zone (5), for absorbing the choc in case of a breaking of the fusible zone, in that it also includes means for preventing the return movement of the second rod portion (7) after the fusible zone has broken and in that the anti-return means pertaining to the second rod portion (7) comprise at least a first tooth (21a) formed on the inside wall of the cylinder body (10) and facing a helical groove (23a, 23b) made in the periphery of the collar (11), co-operation between said first tooth (21a) and said groove (23a, 23b) immediately after the fusible zone (5) has broken causing at least one of the rod portions (7) to become twisted, said first tooth (21a) forming an anti-return abutment after the collar (11) has moved past it as a consequence of said rod portion (7) turning in an opposite direction by elastic effect.

2. A link according to claim 1, **characterized by** the fact that the teeth (21) are spread over one or more spirals (S1, S2).

## Patentansprüche

1. Schwingarm mit einer Stange (2), die an jedem Ende ein Verbindungsorgan (3, 4) aufweist und eine durch die zwei Verbindungsorgane (3, 4) verlaufende geometrische Achse hat, bei dem die genannte Stange (2) einen Sicherungsbereich (5) in Form eines verjüngten Abschnittes zwischen einem mit einem ersten Verbindungsorgan (3) verbundenen ersten Stangenabschnitt (6) und einem mit dem zweiten Verbindungsorgan (4) verbundenen zweiten Stangenabschnitt (7) aufweist, wobei der Sicherungsbereich (5) dazu bestimmt ist, zu brechen, wenn die Zugkraft, welcher der Schwingarm ausgesetzt ist, über einem vorbestimmten Wert liegt, und bei dem Mittel (10, 11, 14), um die zwei Stangenabschnitte (6, 7) im Falle eines Brechens des Sicherungsbereichs (5) untrennbar zu machen, einen Zylinderkörper (10) umfassen, der zur Achse X koaxial und über eines seiner Enden (9) mit dem ersten Stangenabschnitt (6) fest verbunden ist, wobei der Zylinderkörper (10) am anderen Ende einen Boden (13) aufweist, in dem eine Öffnung (14) ausgebildet ist, durch die der zweite Stangenabschnitt (7) hindurch gleiten kann, wobei der Zylinderkörper (10) einen zylindrischen Hohlraum (15), in dem der Sicherungsbereich (5) aufgenommen ist, sowie einen Kragen (11) definiert, welcher um den zweiten Stangenabschnitt (7) herum ausgebildet und geeignet ist, in dem Hohlraum (15) zu gleiten, **dadurch gekennzeichnet, daß** er ferner eine Vielzahl von Zähnen (21) aufweist, die an der Innenwand des Zylinderkörpers (10) in dem durch den Kragen (11) und den Boden (13) des Zylinderkörpers (10) begrenzten ringförmigen Raum (22) gebildet sind, wobei die Zähne (21) geeignet sind, infolge des Brechens des Sicherungsbereichs (5) durch den Kragen (11) zerbrochen zu werden, um den Stoß im Falle eines Brechens des Sicherungsbereichs zu dämpfen, daß er außerdem Mittel umfaßt, um das Zurückbewegen des zweiten Stangenabschnittes (7) nach dem Brechen des Sicherungsbereichs (5) zu verhindern und daß die Mittel zur Rücklaufsicherung des zweiten Stangenabschnitts (7) wenigstens einen ersten Zahn (21 a) aufweisen, der an der Innenwand des Zylinderkörpers (10) gegenüber einer am Umfang des Kragens (11) ausgebildeten Spiralnut (23a, 23b) gebildet ist, wobei das Zusammenwirken des ersten Zahns (21 a) mit der genannten Nut (23a, 23b) unverzüglich nach dem Brechen des Sicherungsbereichs (5) zu einem Verdrehen wenigstens eines der Stangenabschnitte (7) führt, und wobei der erste Zahn (21 a) einen Rücklaufsicherungsanschlag nach seinem Überschreiten durch den Kragen (11) infolge der umgekehrten Drehung des genannten Stangenabschnitts (7) durch Federwirkung bildet.

2. Schwingarm nach Anspruch 1, **dadurch gekennzeichnet, daß** die Zähne (21) über wenigstens eine Spirale (S1, S2) verteilt sind.
